# EUROPEAN PATENT SPECIFICATION

(11) **EP 4 065 297 B1**
(45) Date of publication and mention of the grant of the patent: **03.01.2024**
(21) Application number: 20804270.5
(22) Date of filing: 10.11.2020
(51) Int. Cl.: B21F 7/00, B21F 11/00

(54) **A STEEL CORD CUT END PREPARATION DEVICE AND A WELDING MACHINE FOR WELDING STEEL CORD**
PRÄPARATIONSVORRICHTUNG FÜR STAHLKORDSCHNITTENDE UND SCHWEISSMASCHINE ZUM SCHWEISSEN VON STAHLKORD
DISPOSITIF DE PRÉPARATION D'EXTRÉMITÉ DE COUPE DE CÂBLE D'ACIER ET MACHINE DE SOUDAGE POUR SOUDER UN CÂBLE D'ACIER

(30) Priority: 26.11.2019 CN 201922059266 U
(43) Date of publication of application: 05.10.2022
(73) Proprietor: NV Bekaert SA, 8550 Zwevegem (BE)
(72) Inventor: ZOU, Lingfeng, Jiangyin, Jiangsu Province 214434 (CN); HUANG, Guoqing, Jiangyin, Jiangsu Province 214400 (CN); XU, Ming, Jiangyin, Jiangsu Province 214429 (CN); LIU, Junhu, 8550 Zwevegem (BE)
(74) Representative: Serwas, Harry
(86) International application number: PCT/EP2020/081637
(87) International publication number: WO 2021/104853

(56) References cited:
- WO-A1-2015/144427
- WO-A1-2019/137856
- DE-C- 884 615
- FR-A5- 2 184 241
- JP-A- H02 247 081

## Description

### Technical Field

The invention relates to a steel cord cut end preparation device for preparing a cut end of steel cord for welding. The invention also relates to a welding machine comprising the steel cord cut end preparation device.

### Background Art

Steel cord is for reinforcing rubber articles, normally it has a very long length, i.e. thousands of meters, and therefore the steel cord is wound on a spool and then delivered to the rubber article makers for the further production. Steel cord is normally made by twisting at least two steel wires together, and this twisting process is the so-called cabling or bunching process. During the twisting process, the steel wire breaks sometimes. Recently in steel cord field one trend is to make the lighter steel cord to save energy consumption, thus the steel wires for steel cord become finer and finer but with higher tensile strength, however, such steel wires break easier during the twisting process.

When a steel wire breaks during the twisting process, the general way of repairing is welding. The welding process includes the following steps: firstly cut the steel cord to make a cut end for welding, secondly put two cut ends together, thirdly weld the two cut ends to connect them together, and finally anneal the weld.

The cut end of steel cord for welding is very important, since the quality of the weld is impacted by the quality of the cut end of steel cord.

Presently the cut end of steel cord is made as follows: over-twisting the steel cord, and then cutting the steel cord at the over-twisted portion to form a steel cord cut end.

JPH02-247081, on which the preamble of claim1 is based, discloses a weld machine comprising a steel cord cut end preparation device. The cut end of steel cord is made as follows: firstly over-twisting the steel cord, and then cutting the steel cord at the over-twisted portion. The steel cord cut end preparation device comprises a rotary clamp and a stationary clamp for clamping the steel cord, it also comprises a cutter for cutting the steel cord. However, this device is not available for the steel cord consisting of steel wires with super high tensile strength (ST) or above, since the over-twisting on the steel cord consisting of the steel wires with super high tensile strength or above would lead to more fracture of the steel wires, and then the operator must prepare the cut end again in case of steel wire fracture, and this decreases the work efficiency.

WO2019/137856 discloses a welder has a weld part, a clamp and a number of tools, each of the tools has a tool indicator that is either in the complete or in the non-complete condition, the tools can be processing tools or testing tools, when each processing and testing tool indicator is set to complete the clamp will open. This is to ensure that the operator has done all necessary steps and checks on the weld.

WO2015/144427 discloses a welding apparatus using a direct current source controlled over time using a programmable controller.

DE884615 discloses a device for cutting ropes. FR2184241 discloses a cable cutting and welding device which is able to rotate the steel cable until it breaks, the steel cable is heated during rotating so that the steel wires in the cable is melted and welded with each other.

### Disclosure of Invention

The primary object of the invention is to solve the problem of the prior art.

One object of the invention is to provide a steel cord cut end preparation device for preparing a cut end of steel cord for welding.

Another object of the invention is to provide a welding machine for welding steel cords.

According to one object of the invention, a steel cord cut end preparation device is provided. The steel cord cut end preparation device comprises a set of clamps for clamping at least one length of steel cord, a rotating driving unit for driving the clamped length of steel cord to be over-twisted and at least one cutter for cutting the steel cord at the over-twisted portion to make a cut end of steel cord and, the steel cord cut end preparation device further comprises a heating unit for heating the clamped length of steel cord and a controller for at least controlling the heating time and voltage for heating of the heating unit and the rotating turns of the rotating driving unit for over-twisting the clamped steel cord to a pre-set level, so that the clamped length of steel cord is heated during, before or after it is over-twisted.

Different from the prior art, the steel cord cut end preparation device has a heating unit for heating the clamped length of steel cord, so that the clamped length of steel cord is heated during, before or after it is over-twisted. By doing this, the invention steel cord cut end preparation device can significantly reduce the fracture problem of the steel wires with super high tensile strength or above led by the over-twisting step for making cut end of steel cord for welding, thereafter more qualified cut ends can be obtained for the steel cord comprising steel wires with super high tensile strength or above, and the steel cord welding success ratio is increased.

According to the invention, "the clamped length of steel cord is heated during, before or after it is over-twisted" means that the sequences of the heating of the steel cord and the over-twisting of the steel cord have various ways. One preferable solution is that the heating is done before and during the over-twisting. Another preferable solution is that the heating is done during the over-twisting (the two operations are synchronized). These preferable solutions can improve the fracture problems of steel wires during the over-twisting of the steel cord very much.

According to the invention, the heating unit is an electrical resistive heating unit. As a preferable solution, the electrical resistive heating unit, the clamped length of steel cord and the corresponding clamps generate a circuit loop when the electrical power is supplied.

As an alternative solution, the heating unit can be an induction-heating unit or even a gas fired heating unit.

Preferably, the heating applied to the clamped length of steel cord is done during the over-twisting, and the heating could be a continuous heating or a dis-continuous heating, while the dis-continuous heating means the heating and non-heating repeat in a pre-determined time period.

According to the invention, the set of clamps comprises at least one rotatable clamp and at least one stationary clamp. Preferably, the at least one rotatable clamp and the at least one stationary clamp are electrical conductive clamps and are connected with the heating unit for electrifying the clamped length of steel cord. The heating unit comprises at least one electrical brush and at least one voltage transformer for providing the electrical voltage or electrical power, wherein the electrical brush is for transmitting the electrical power to the rotatable clamp. Preferably, the set of clamps comprises two rotatable clamps, thereby two cut ends of steel cords can be prepared at the same time, and this improves the work efficiency.

According to the invention, "a set of clamps for clamping at least one length of steel cord" means that one, two or more steel cords with a certain length can be clamped.

As a preferable solution, to save the material and save the cost, the rotatable clamp and/or the stationary clamp comprises an electrical conductive element and a holder for holding the electrical conductive element, and the rotatable clamp or the stationary clamp is connected with the heating unit for electrifying the clamped length of steel cord via the electrical conductive element, so that the electrical conductive element makes the stationary clamp or the rotatable clamp being electrical conductive. The holder provides the main clamping strength. This design achieves a good balance between the electrical conductivity and the clamping strength for a clamp.

Preferably, the electrical conductive element is made of copper, copper alloy, aluminium or aluminium alloy, and the holder is made of iron or iron alloy. The iron or iron alloy material makes the holder being electrical conductive, however, the holder has less electrical conductivity than the electrical conductive element, therefore the electrical conductive element play a major role in the electric conduction for the clamped length of steel cord.

The automatically operated rotating driving unit comprises at least one motor for rotating the at least one rotatable clamp, at least one induction electrical eye for monitoring the number of turns of the rotatable clamp and transferring the signal to the controller. With the rotating driving unit, the over-twisting of the clamped length of steel cord with a determined number of rotating or twisting turn is realized.

The controller is for controlling the rotating turns of over-twisting, heating time, voltage for heating and etc. According to the invention, depending on the construction of the steel cord, a proper heating time, number of rotating turns and voltage for heating are pre-set in the controller. The working sequences of heating and rotating are also set in the controller, thereby controlling that the heating of the clamped length of steel cord is done during, before or after over-twisting of the clamped length of steel cord.

The cutter may be located between the at least one stationary clamp and at least one rotatable clamp. Alternatively the cutter is located beside the at least one stationary clamp in the direction opposite to the at least one rotatable clamp, and this avoids the damage from the cutter to the clamped length of steel cord during over-twisting.

The cutter can be any one of the existing type of cutter. Preferably, the cutter comprises a first plate and a second plate separately provided with at least one cutter blade, the cutter further comprises a rotating shaft and at least one set of disc springs. The rotating shaft, for example a screw, extends through the first plate and is fixed to the second plate. The disc springs are set between the first plate or the second plate and the cutter blade set correspondingly, so that the compression of the cutter is adjusted by the compression or the release of the disc springs via the rotating of the rotating shaft. This is easier for operating. Preferably, the first plate and the second plate are separately inserted with two cutter blades.

Generally, the over-twisting along the clamped length of the steel cord is inhomogeneous, since the heating along the length of the steel cord is inhomogeneous, and the relatively more heated portion is relatively easier to be over-twisted. Normally, the central portion of the clamped length of steel cord is the relatively more heated portion and thereby the relatively more over-twisted portion, this means the central portion of the clamped length of steel cord is relatively tighter than the end portions that is close to the clamps after being over-twisted. In principle, the relatively more over-twisted portion is preferred for being cut to make a cut end of steel cord without loose. As thus the position of the cutter is pre-set and fixed according to this to ensure the cut is done on the central portion of the clamped length of steel cord which is the relatively over-twisted portion. One finding is that the heating on the clamped length of steel cord is slight and very easily to be influenced and eliminated by the working environment, such as the cold temperature or the wind, the relatively more heated portion of the clamped length of steel cord sometime is out of the central portion, as a result, the relatively more over-twisted portion of the clamped length of steel cord is out of the central portion, and the cut is not on the relatively more over-twisted portion of the clamped length of steel cord due to the fixed position of the cutter. This is not the expectation. To solve the above problem, at least one cover is installed for reducing the heat elimination of the clamped length of steel cord during heating. The clamped length of steel cord is partially or completely accommodated inside the cover during the heating, as thus the heat elimination of the clamped length of steel cord during heating is reduced. As a preferable solution, the cover is a tube with a hollow along its length, wherein one end of the tube is connected with the clamp preferably the rotatable clamp, and at least the two-thirds of the clamped length of steel cord is accommodated inside the hollow of the tube during the heating.

According to another aspect of the invention, a welding machine is provided. The welding machine comprises a welding device for welding the cut ends of steel cords and a steel cord cut end preparation device, the welding machine optionally comprises an annealing device for annealing the weld, the steel cord cut end preparation device comprises a set of clamps for clamping at least one length of steel cord, a rotating driving unit for driving the clamped length of steel cord to be over-twisted and at least one cutter for cutting the steel cord at the over-twisted portion to make a cut end of steel cord and, the steel cord cut end preparation device further comprises a heating unit for heating the clamped length of steel cord and a controller for controlling the heating unit and the rotating driving unit, so that the clamped length of steel cord is heated during, before or after it is over-twisted.

### Brief Description of Figures in the Drawings

Figure 1a-1c shows one embodiment of the steel cord cut end preparation device.
Figure 2a-2b shows the cutter of the steel cord cut end preparation device.
Figure 3a-3b shows the cover of the steel cord cut end preparation device.

### Mode(s) for Carrying Out the Invention

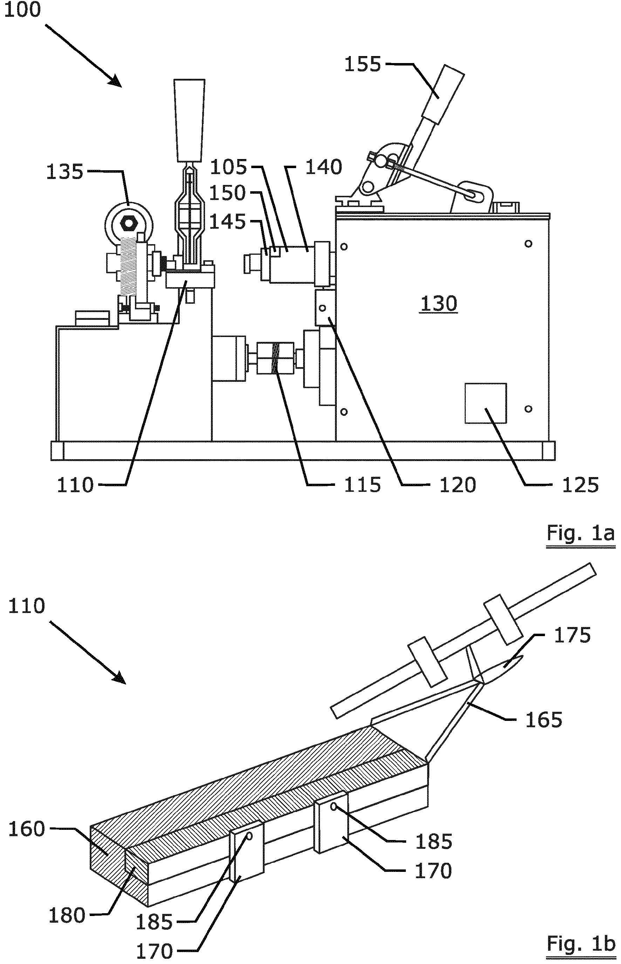

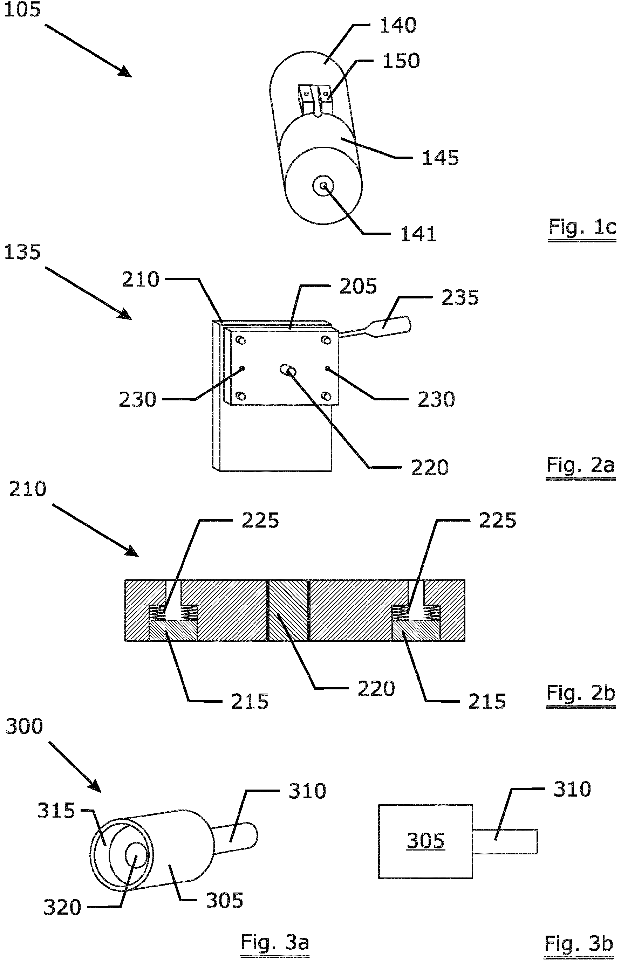

Figure 1a-1c shows one embodiment of the steel cord cut end preparation device. The steel cord cut end preparation device 100 comprises a set of clamps, one cutter, a rotating driving unit and a heating unit.

The set of clamps comprises two rotatable clamps 105 and one stationary clamp 110. Each rotatable clamp 105 has a movable clamping head 145, a first electrical conductive element 140 and a second electrical conductive element 150. Two rotatable clamps 105 are operated by a first handle 155. The movable clamping head 145 is set with a first through hole 141. The second electrical conductive element 150 is fixed on the first electrical conductive element 140 and connected with the first through hole 141. The steel cord is clamped via the engagement of the movable clamping head 145 and the second electrical conductive element 140 by pressing the first handle 155. The stationary clamp 110 has a holder and a third electrical conductive element 180. The holder has a fixed down part 160, a rotatable upper part 165 and two guiding elements 170, and the rotatable upper part 165 is set with a second handle 175. The third electrical conductive element 180 is fixed on the fixed down part 160. Each of the guiding elements 170 has a second through hole 185 with a bottom in line with the surface of the third electrical conductive element 180. The steel cord is clamped via the engagement of the fixed down part 160 and the rotatable upper part 165 by pressing the second handle 175.

The rotating driving unit is located inside the cabinet 130, and it comprises a motor, two rotating shafts and one belt for connecting the motor and the rotating shafts. The two rotating shafts are connecting with the two rotatable clamps 105. The rotating driving unit further comprises an induction electrical eye for monitoring the rotating turns of the rotatable clamp and transferring the corresponding signal to the controller for controlling the rotating driving unit.

The heating unit for electrifying and heating the clamped length of steel cord comprises two electrical brushes 120 for transmitting the electrical power to the rotatable clamps 105 and at least one voltage transformer 115 for providing the proper voltage. Each electrical brush 120 is electrically connected with one of the first electrical conductive element 140. When the heating unit works, the electrical power is supplied from the voltage transformer 115 to the electrical brush 120, and then to the first electrical conductive element 140, and then to the second electrical conductive element 150, and then to the clamped length of steel cord, and then to the third electrical conductive element 180, thereafter the clamped length of steel cord is heated.

The controller is realized by a control panel 125 with a number of pre-set programs. The control panel 125 is installed on the cabinet 130 for easier operation. Depending on the constructions of the steel cords, a proper heating time, number of rotating turns, voltage of heating or the working sequences of heating and rotating is pre-set via the control panel 125.

Figure 2a shows the cutter, figure 2b shows the cross-section the second plate of the cutter, figure 2b shows the part of the screw 220 in the second plate 210. The cutter 135 comprises a first plate 205 and a second plate 210 separately inserted with two cutter blades 215, the cutter 135 further comprises a screw 220 extending through the first plate 205 and fixed with the second plate 210 and the disc springs 225 set between each cutter blade 215 and the second plate 210. When rotating the screw 220 forward or backward, the disc springs 225 are compressed or released, thereby the connection between the second plate 210 and the cutter blades 215 becomes more close or more loose, thereby the compression of the cutter 135 is adjusted. The cutter is set with two third through holes 230 for guiding the steel cords. The cutter has a third handle 235 for operating. Depends on the constructions of the steel cords, a proper cutter compression is pre-determined.

The first through holes 141, the second through holes 185 and the third through holes 230 are in the same horizontal level.

The cutter 135 is located beside the stationary clamp 110 in the direction opposite to the rotatable clamps 105.

When a steel cord is detected with one or more broken steel wires, the portion of steel cord with broken steel wire is cut away thereby to have two separate steel cords with two irregular ends, and then each of the two irregular ends of steel cords is pushed to go through the third through hole 230 in the cutter 135, the second through hole 185 of the holder and the first through hole 141 of the movable clamping head in sequence, and then a length of the steel cord is clamped by the rotatable clamp 105 and the stationary clamp 110 by pressing down the first handle 155 and the second handle 175 in sequence. The first through hole 141 is oblique with a certain angle, so that the steel cord is bent thereby forming a hook at its end portion at the rotatable clamp 105.

Then the motor is activated, and the rotatable clamp 105 rotates in a pre-set number of turns, whereby the clamped length of steel cord is over-twisted. For sure the rotating direction shall be the same as the twist direction of the steel cord itself to ensure the clamped length of steel cord is over-twisted but not un-twisted. When the induction electrical eye detects that the pre-set number of rotating turns is achieved, the controller will give a signal to the motor, and then the motor stops working. The heating unit works according to the pre-setting, thereafter the clamped length of steel cord is heated during, before or after it is over-twisted by the heating unit. When the over-twisting and heating of the steel cord are finished, each of the steel cords is pulled out from the first through hole 141 until the steel cord is stuck at the second through hole 185 of the stationary clamp 110 because of the existing of the hook. Then the steel cord is cut at the over-twisted portion by pressing down the third handle 235 of the cutter 135.

A weld quality comparison test is done between the invention device and prior art. Table 1 summarizes the test result. The test is to know if the weld of the steel cord passes the breaking load measurement that requires the breaking load of the weld is at least 40% of the minimum breaking load of the steel cord as measured in a standard GB/T11181-2016.

**Table 1**

| | Invention 1 | Invention 2 | Invention 3 | Invention 4 | Invention 5 | Prior art |
|---|---|---|---|---|---|---|
| Heating during over-twisting | yes | yes | yes | no | no | no |
| Heating before over-twisting | yes | yes | no | yes | no | no |
| Heating after over-twisting | no | yes | no | no | yes | no |
| steel cord construction | 2x1 | 2x1 | 2x1 | 2x1 | 2x1 | 2x1 |
| Steel wire diameter (mm) | 0.3 | 0.3 | 0.3 | 0.3 | 0.3 | 0.3 |
| Tensile strength of the steel wire of steel cord (MPa) | ST | ST | ST | ST | ST | ST |
| Welding success ratio | 80% | 90% | 50% | 60% | 40% | 30% |

Welding success ratio means in ten samples the number of weld of the steel cord passing the breaking load measurement.

From the table, it is clear that the invention device can increase the welding success ratio significantly.

As a preferably solution, two covers are used for reducing the heat elimination of the clamped length of steel cord during heating. Each of the covers is connected with one rotatable clamp 105. The cover is shown in figure 3a-3b. The cover is a tube 300. The tube 300 has two parts 305 and 310, the part 305 has a hollow 315 with bigger diameter for connecting with the rotatable clamp 105 and accommodating the steel cord, and the part 310 has a hollow 320 with smaller diameter for accommodating the steel cord. The two parts 305 and 310 are integral. The tube 300 has a certain length to make sure that at least two-thirds of the clamped length of steel cord is accommodated inside the tube 300 during heating. Considering the connection with other elements, the tube 300 can be set with hole or slot if any.

A second embodiment is a welding machine for welding steel cords, it comprises a welding device for welding, a steel cord cut end preparation device 100 and annealing device for annealing the weld.

## Claims

1. A steel cord cut end preparation device (100), comprising a set of clamps for clamping at least one length of steel cord, a rotating driving unit for driving said clamped length of steel cord to be over-twisted and at least one cutter (135) for cutting the steel cord at the over-twisted portion to make a cut end of steel cord, **characterized in that** said steel cord cut end preparation device (100) further comprises a heating unit for heating the clamped length of steel cord and a controller configured to at least control the heating time and voltage for heating of said heating unit and the number of rotating turns of said rotating driving unit for over-twisting said clamped steel cord to a pre-set level.

2. A steel cord cut end preparation device as claimed in claim 1, **characterized in that** said heating unit is an electrical resistive heating unit.

3. A steel cord cut end preparation device as claimed in claim 2, **characterized in** said a set of clamps comprises at least one rotatable clamp (105) and at least one stationary clamp (110), said at least one rotatable clamp (105) and said at least one stationary clamp (110) are electrical conductive clamps and are connected with said heating unit for electrifying the clamped length of steel cord, said heating unit comprises at least one electrical brush (120) for transmitting the electrical power to said clamps and at least one voltage transformer.

4. A steel cord cut end preparation device as claimed in claim 3, **characterized in that** said rotatable clamp (105) and/or said stationary clamp (110) comprises an electrical conductive element (140, 180) and a holder for holding said electrical conductive element (140, 180), said electrical conductive element (140, 180) is connected with said heating unit for electrifying the clamped length of steel cord.

5. A steel cord cut end preparation device as claimed in claim 4, **characterized in that** said electrical conductive element (140, 180) is made of copper, copper alloy, aluminium or aluminium alloy, and said holder is made of iron or iron alloy.

6. A steel cord cut end preparation device as claimed in any one of claims 3 to 5, **characterized in that** said rotating driving unit comprises a motor for rotating said at least one rotatable clamp (105) and at least one induction electrical eye for monitoring the rotating turns of said rotatable clamp (105) and transferring the signal to said controller.

7. A steel cord cut end preparation device as claimed in any one of claims 3 to 5, **characterized in that** said cutter (135) is located beside said at least one stationary clamp (110) in the direction opposite to said at least one rotatable clamp (105).

8. A steel cord cut end preparation device as claimed in any one of claims 1 to 7, **characterized in that** said cutter (135) comprises a first plate (205) and a second plate (210) separately inserted with at least one cutter blade (215), said cutter further comprises a rotating shaft (220) extending through said first plate (205) and is fixed to said second plate (210), the disc springs (225) are set between said first plate (205) or said second plate (210) and the corresponding cutter blade (215).

9. A steel cord cut end preparation device as claimed in any one of claims 1-8, **characterized in that** said steel cord cut end preparation device (100) comprises at least one cover for reducing the heat elimination of the clamped length of steel cord during heating.

10. A steel cord cut end preparation device as claimed in claim 9, **characterized in that** said cover is a tube (300) connecting with one of said a set of clamps, said tube (300) is hollow for accommodating the clamped length of steel cord partially or completely during heating.

11. A steel cord cut end preparation device as claimed in claim 10, **characterized in** said tube (300) has a length for accommodating at least two-thirds of the clamped length of steel cord during heating.

12. A welding machine for welding steel cords, said welding machine comprising a welding device and a steel cord cut end preparation device (100), said welding machine optionally comprising an annealing device, **characterized in that** said steel cord cut end preparation device (100) is as claimed in any one of claims 1-11.

## Patentansprüche

1. Vorrichtung (100) zur Vorbereitung eines Stahlseilschnittendes, umfassend einen Satz von Spannvorrichtungen zum Einspannen mindestens einer Stahlseillänge, eine drehende Antriebseinheit zum Antreiben der eingespannten zu verdrillenden Stahlseillänge und mindestens eine Schneidvorrichtung (135) zum Schneiden des Stahlseils an dem verdrillten Abschnitt, um ein Schnittende des Stahlseils herzustellen, **dadurch gekennzeichnet, dass** die Vorrichtung (100) zur Vorbereitung eines Stahlseilschnittendes ferner eine Heizeinheit zum Aufheizen der eingespannten Stahlseillänge und eine Steuerung umfasst, die dazu ausgelegt ist, mindestens die Aufheizzeit und Spannung zum Aufheizen der Heizeinheit und die Anzahl von Umdrehungen der drehenden Antriebseinheit zum Verdrillen des eingespannten Stahlseils zu einem voreingestellten Ausmaß zu steuern.

2. Vorrichtung zur Vorbereitung eines Stahlseilschnittendes nach Anspruch 1, **dadurch gekennzeichnet, dass** die Heizeinheit eine elektrische Widerstandsheizeinheit ist.

3. Vorrichtung zur Vorbereitung eines Stahlseilschnittendes nach Anspruch 2, **dadurch gekennzeichnet, dass** der eine Satz von Spannvorrichtungen mindestens eine drehbare Spannvorrichtung (105) und mindestens eine feststehende Spannvorrichtung (110) umfasst, wobei die mindestens eine drehbare Spannvorrichtung (105) und die mindestens eine feststehende Spannvorrichtung (110) elektrisch leitende Spannvorrichtungen sind und mit der Heizeinheit zum Elektrifizieren der eingespannten Stahlseillänge verbunden sind, wobei die Heizeinheit mindestens eine elektrische Bürste (120) zum Übertragen der elektrischen Leistung auf die Spannvorrichtungen und mindestens einen Spannungstransformator umfasst.

4. Vorrichtung zur Vorbereitung eines Stahlseilschnittendes nach Anspruch 3, **dadurch gekennzeichnet, dass** die drehbare Spannvorrichtung (105) und/oder die feststehende Spannvorrichtung (110) ein elektrisch leitendes Element (140, 180) und einen Halter zum Halten des elektrisch leitenden Elements (140, 180) umfasst, wobei das elektrisch leitende Element (140, 180) mit der Heizeinheit zum Elektrifizieren der eingespannten Stahlseillänge verbunden ist.

5. Vorrichtung zur Vorbereitung eines Stahlseilschnittendes nach Anspruch 4, **dadurch gekennzeichnet, dass** das elektrisch leitende Element (140, 180) aus Kupfer, Kupferlegierung, Aluminium oder Aluminiumlegierung besteht und der Halter aus Eisen oder Eisenlegierung besteht.

6. Vorrichtung zur Vorbereitung eines Stahlseilschnittendes nach einem der Ansprüche 3 bis 5, **dadurch gekennzeichnet, dass** die drehende Antriebseinheit einen Motor zum Drehen der mindestens einen drehbaren Spannvorrichtung (105) und mindestens ein elektrisches Induktionsauge zum Überwachen der Umdrehungen der drehbaren Spannvorrichtung (105) und Übertragen des Signals an die Steuerung umfasst.

7. Vorrichtung zur Vorbereitung eines Stahlseilschnittendes nach einem der Ansprüche 3 bis 5, **dadurch gekennzeichnet, dass** die Schneidvorrichtung (135) neben mindestens einer feststehenden Spannvorrichtung (110) in der Richtung entgegengesetzt zu der mindestens einen drehbaren Spannvorrichtung (105) angeordnet ist.

8. Vorrichtung zur Vorbereitung eines Stahlseilschnittendes nach einem der Ansprüche 1 bis 7, **dadurch gekennzeichnet, dass** die Schneidvorrichtung (135) eine erste Platte (205) und eine zweite Platte (210) umfasst, in die jeweils mindestens eine Schneidvorrichtungsklinge (215) eingesetzt ist, wobei die Schneidvorrichtung ferner eine drehende Welle (220) umfasst, die sich durch die erste Platte (205) erstreckt und an der zweiten Platte (210) fixiert ist, wobei die Scheibenfedern (225) zwischen der ersten Platte (205) und der zweiten Platte (210) und der entsprechenden Schneidvorrichtungsklinge (215) eingerichtet sind.

9. Vorrichtung zur Vorbereitung eines Stahlseilschnittendes nach einem der Ansprüche 1-8, **dadurch gekennzeichnet, dass** die Vorrichtung (100) zur Vorbereitung eines Stahlseilschnittendes mindestens eine Abdeckung zum Verringern der Wärmeableitung der eingespannten Stahlseillänge während des Aufheizens umfasst.

10. Vorrichtung zur Vorbereitung eines Stahlseilschnittendes nach Anspruch 9, **dadurch gekennzeichnet, dass** die Abdeckung ein Rohr (300) ist, das mit einer des Satzes von Einspannvorrichtungen verbunden ist, wobei das Rohr (300) hohl ist, um die eingespannte Stahlseillänge während des Aufheizens teilweise oder vollständig aufzunehmen.

11. Vorrichtung zur Vorbereitung eines Stahlseilschnittendes nach Anspruch 10, **dadurch gekennzeichnet, dass** das Rohr (300) eine Länge zum Aufnehmen von mindestens zwei Dritteln der eingespannte Stahlseillänge während des Aufheizens aufweist.

12. Schweißmaschine zum Schweißen von Stahlseilen, wobei die Schweißmaschine eine Schweißvorrichtung und eine Vorrichtung (100) zur Vorbereitung eines Stahlseilschnittendes umfasst, wobei die Schweißmaschine optional eine Glühvorrichtung umfasst, **dadurch gekennzeichnet, dass** die Vorrichtung (100) zur Vorbereitung eines Stahlseilschnittendes wie in einem der Ansprüche 1-11 beansprucht ist.

## Revendications

1. Dispositif de préparation d'extrémité de coupe de câble d'acier (100), comprenant un ensemble de pinces pour serrer au moins une longueur de câble d'acier, une unité d'entraînement rotative pour entraîner ladite longueur serrée de câble d'acier devant être surenroulée et au moins un dispositif de coupe (135) pour couper le câble d'acier au niveau de la partie surenroulée afin de réaliser une extrémité de coupe de câble d'acier, **caractérisé en ce que** ledit dispositif de préparation d'extrémité de coupe de câble d'acier (100) comprend en outre une unité de chauffage pour chauffer la longueur serrée de câble d'acier et un dispositif de commande conçu pour au moins commander le temps de chauffage et la tension de chauffage de ladite unité de chauffage et le nombre de tours rotatifs de ladite unité d'entraînement rotative pour surenrouler ledit câble d'acier serré à un niveau prédéfini.

2. Dispositif de préparation d'extrémité de coupe de câble d'acier selon la revendication 1, **caractérisé en ce que** ladite unité de chauffage est une unité de chauffage électrique résistive.

3. Dispositif de préparation d'extrémité de coupe de câble d'acier selon la revendication 2, **caractérisé en ce que** ledit ensemble de pinces comprend au moins une pince rotative (105) et au moins une pince fixe (110), ladite au moins une pince rotative (105) et ladite au moins une pince fixe (110) sont des pinces électroconductrices et sont connectées à ladite unité de chauffage pour électrifier la longueur serrée de câble d'acier, ladite unité de chauffage comprend au moins une brosse électrique (120) pour transmettre l'énergie électrique auxdites pinces et au moins un transformateur de tension.

4. Dispositif de préparation d'extrémité de coupe de câble d'acier selon la revendication 3, **caractérisé en ce que** ladite pince rotative (105) et/ou ladite pince fixe (110) comprennent un élément électroconducteur (140, 180) et un support pour maintenir ledit élément électroconducteur (140, 180), ledit élément électroconducteur (140, 180) est connecté à ladite unité de chauffage pour électrifier la longueur serrée de câble d'acier.

5. Dispositif de préparation d'extrémité de coupe de câble d'acier selon la revendication 4, **caractérisé en ce que** ledit élément électroconducteur (140, 180) est en cuivre, en alliage de cuivre, en aluminium ou en alliage d'aluminium, et **en ce que** ledit support est en fer ou en alliage de fer.

6. Dispositif de préparation d'extrémité de coupe de câble d'acier selon l'une quelconque des revendications 3 à 5, **caractérisé en ce que** l'unité d'entraînement rotative comprend un moteur pour faire tourner ladite au moins une pince rotative (105) et au moins un œil électrique à induction pour surveiller les tours de rotation de ladite pince rotative (105) et transférer le signal audit dispositif de commande.

7. Dispositif de préparation d'extrémité de coupe de câble d'acier selon l'une quelconque des revendications 3 à 5, **caractérisé en ce que** ledit dispositif de coupe (135) est situé à côté de ladite au moins une pince fixe (110) dans la direction opposée à ladite au moins une pince rotative (105).

8. Dispositif de préparation d'extrémité de coupe de câble d'acier selon l'une quelconque des revendications 1 à 7, **caractérisé en ce que** ledit dispositif de coupe (135) comprend une première plaque (205) et une seconde plaque (210) insérées séparément avec au moins une lame de dispositif de coupe (215), ledit dispositif de coupe comprenant en outre un arbre rotatif (220) s'étendant à travers ladite première plaque (205) et étant fixé à ladite seconde plaque (210), les ressorts à disque (225) étant placés entre ladite première plaque (205) ou ladite seconde plaque (210) et la lame de dispositif de coupe (215) correspondante.

9. Dispositif de préparation d'extrémité de coupe de câble d'acier selon l'une quelconque des revendications 1 à 8, **caractérisé en ce que** ledit dispositif de préparation d'extrémité de coupe de câble d'acier (100) comprend au moins un couvercle destiné à réduire l'élimination de la chaleur de la longueur serrée de câble d'acier pendant le chauffage.

10. Dispositif de préparation d'extrémité de coupe de câble d'acier selon la revendication 9, **caractérisé en ce que** ledit couvercle est un tube (300) relié à l'une dudit ensemble de pinces, ledit tube (300) est creux pour accueillir partiellement ou complètement la longueur serrée de câble d'acier pendant le chauffage.

11. Dispositif de préparation d'extrémité de coupe de câble d'acier selon la revendication 10, **caractérisé en ce que** ledit tube (300) a une longueur permettant de loger au moins les deux tiers de la longueur serrée de câble d'acier pendant le chauffage.

12. Machine à souder pour souder des câbles d'acier, ladite machine à souder comprenant un dispositif de soudage et un dispositif de préparation d'extrémité de coupe de câble d'acier (100), ladite machine à souder comprenant éventuellement un dispositif de recuit, **caractérisée en ce que** ledit dispositif de préparation d'extrémité de coupe de câble d'acier (100) est selon l'une quelconque des revendications 1 à 11.
